# EUROPÄISCHE PATENTSCHRIFT

(11) **EP 1 214 563 B1**
(45) Veröffentlichungstag und Bekanntmachung des Hinweises auf die Patenterteilung: **02.03.2005**
(21) Anmeldenummer: 00964017.8
(22) Anmeldetag: 14.08.2000
(51) Int. Cl.: G01D 7/08, B60K 35/00

(54) **DARSTELLUNG DES SYSTEMZUSTANDES EINES GESCHWINDIGKEITS- UND ABSTANDSREGELUNGSSYSTEMS**
REPRESENTING THE SYSTEM STATE OF A SPEED AND DISTANCE CONTROL SYSTEM
REPRESENTATION DE L'ETAT D'UN SYSTEME DE REGULATION DE L'ESPACEMENT ENTRE VEHICULES ET DE LA VITESSE

(30) Priorität: 03.09.1999 DE 19941972
(43) Veröffentlichungstag der Anmeldung: 19.06.2002
(73) Patentinhaber: Volkswagen Aktiengesellschaft, 38436 Wolfsburg (DE)
(72) Erfinder: RUCHATZ, Thomas, 38165 Lehre (DE); CRULL, Torsten, 38106 Braunschweig (DE); KIESEWETTER, Thomas, 38118 Braunschweig (DE)
(86) Internationale Anmeldenummer: PCT/EP2000/007914
(87) Internationale Veröffentlichungsnummer: WO 2001/018493

(56) Entgegenhaltungen:
- US-A- 5 230 400

## Beschreibung

Die Erfindung betrifft ein Verfahren und eine Vorrichtung zur Darstellung des Systemzustandes eines Geschwindigkeits- und Abstandsregelungssystems.

Bekannte Geschwindigkeits- und Abstandsregelungssysteme bestehen im wesentlichen aus einer Abstandssensorik, einer Auswerteeinheit, einer Eingabe- und Ausgabeeinheit und einer Steuereinrichtung. Dabei kann über die Eingabeeinheit eine Wunschgeschwindigkeit eingestellt werden, die von der Steuereinrichtung eingestellt und gehalten wird, falls dies der Verkehr erlaubt. Mittels einer derartigen Geschwindigkeitsregelautomatik GRA ist somit sehr einfach eine konstante Reisegeschwindigkeit einstellbar. Aufgrund der Verkehrsdichte kann aber die eingestellte Wunschgeschwindigkeit nicht immer eingehalten werden. Existiert vorausfahrender Verkehr, hilft eine automatische Abstandsregelung ADR, einen bestimmten Sicherheitsabstand automatisch einzuhalten. Dieser gesetzlich vorgeschriebene Sicherheits- bzw. Folgeabstand ist von der Geschwindigkeit abhängig, so daß oftmals auch mit einer geschwindigkeitsabhängigen Folgezeit operiert wird. Dazu wird mittels der Abstandssensorik die Entfernung eines vorausfahrenden Kraftfahrzeugs aus der Laufzeit emittierter Signale ermittelt. Die Geschwindigkeit kann dann mittels einer Differenzmessung oder direkt anhand der Doppler-Verschiebung bestimmt werden. Da nicht jeder Kraftfahrzeugführer mit dem gleichen Folgeabstand fahren möchte, erlauben neuere Abstandsregelungssysteme die Einstellung eines Folgeabstandes innerhalb eines bestimmten Bereiches. Alle diese eingestellten Parameter bzw. erfaßten Parameter müssen nun zur Information für den Kraftfahrzeugführer auf der als Display ausgebildeten Ausgabeeinheit dargestellt werden.

Eine solche Anzeige zur Darstellung verschiedener Parameter ist beispielsweise aus der DE 195 39 799 A1 bekannt, bei der ein erfaßtes Kraftfahrzeug piktogrammförmig dargestellt wird, wobei die Größe des Piktogramms mit abnehmendem Abstand größer wird, um so visuell die Annäherung zu verstärken. Die eingestellte Wunschgeschwindigkeit, die Ist-Geschwindigkeit und die Geschwindigkeit des erfaßten Kraftfahrzeugs werden in einem integrierten Balkendiagramm mittels graphischer Hervorhebung dargestellt. Nachteilig an der bekannten Anzeige von Parametern ist, daß sie einen gewissen Abstraktionsgrad erfordern.

Ein generelles Problem besteht darin, daß aufgrund des geringen Bauraums und eines geringen Verkabelungsaufwandes die vorhandene Anzeigeeinheit in einem Kraftfahrzeug multifunktional genutzt werden muß, beispielsweise zur Darstellung von digitalen Straßenkarten eines Navigationssystems oder für Einstellungen von Komfortgeräten wie Autotelefon oder Radio. Dies kann dazu führen, daß der Kraftfahrzeugführer nach einer gewissen Zeit nicht mehr weiß, ob und wie er das Geschwindigkeits- und Abstandsregelungssystem eingestellt hat bzw. in welchem Zustand es sich augenblicklich befindet.

Der Erfindung liegt daher das technische Problem zugrunde, ein Verfahren und eine Vorrichtung mit einer multifunktionalen Anzeigeeinheit zu schaffen, mittels derer ein Kraftfahrzeugführer einfach über Einstellung und Systemzustand eines Geschwindigkeits- und Abstandsregelungssystems informierbar ist.

Die Lösung des technischen Problems ergibt sich durch die Patentansprüche 1 und 4. Weitere vorteilhafte Ausgestaltungen der Erfindung ergeben sich aus den Unteransprüchen.

Durch die permanente Darstellung eines mindestens zweiteiligen Piktogramms auf der Anzeigeeinheit, wobei jeweils dem Abstandsregelungssystem bzw. Geschwindigkeitsregelungssystem ein Teil des Piktogramms zugeordnet ist, wobei der Teil des jeweils aktiven Systems optisch hervorgehoben dargestellt wird, kann sich der Kraftfahrzeugführer jederzeit, unabhängig von dem Hauptmenü auf der Multifunktions-Anzeigeeinheit über den aktuellen Zustand des Geschwindigkeits- und Abstandsregelungssystem informieren, ohne dies selber aufzurufen.

In einer weiteren bevorzugten Ausführungsform wird das Piktogramm permanent an der gleichen Position auf der Anzeigeeinheit dargestellt. Dies vereinfacht für die Kraftfahrzeugführer die visuelle Orientierung und für den Mikroprozessor den Bildaufbau. Des weiteren ist es dadurch möglich mindestens Teile des Piktogramms permanent auszubilden und davon jeweils nur in Abhängigkeit vom Systemzustand beispielsweise mittels LEDs zu beleuchten.

In einer weiteren bevorzugten Ausführungsform ist dem Piktogramm mindestens ein weiteres Element zugeordnet, das die Einschaltung mindestens eines geschwindigkeitsregulierenden Systems anzeigt, nämlich des Geschwindigkeits- und/oder des Abstandsregelungssystems, unabhängig davon, ob diese jeweils aktuell aktiv sind.

Die Erfindung wir nachfolgend anhand eines bevorzugten Ausführungsbeispiels näher erläutert. Die Fig. zeigen:
- Fig. 1:: ein Blockschaltbild eines Geschwindigkeits- und Abstandsregelungssystems
- Fig. 2:: eine Darstellung eines Piktogramms bei reiner Geschwindigkeitsregelung und
- Fig. 3:: eine Darstellung eines Piktogramms bei aktiver Abstandsregelung.

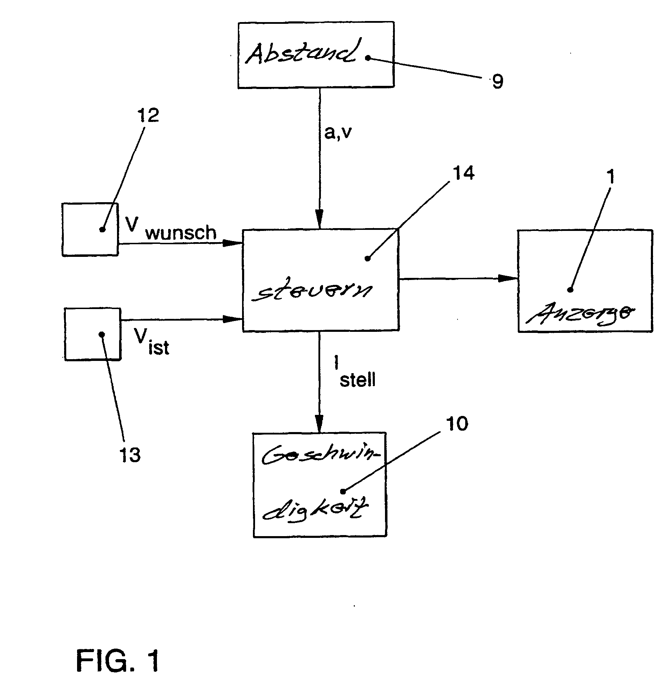

In Fig. 1 ist das vereinfachte Blockschaltbild eines Geschwindigkeits- und Abstandsregelungssystem gezeigt, welches zumindest aus einer Steuereinheit 14, einer Einrichtung 9 zur Bestimmung des Abstandes zwischen einem vorausfahrenden Kraftfahrzeug und dem eigenen Kraftfahrzeug sowie der Geschwindigkeit des vorausfahrenden Kraftfahrzeuges, mindestens einer Einrichtung 10 zur Beeinflussung der Geschwindigkeit des eigenen Kraftfahrzeuges, einer Anzeigeeinheit 1 zur Darstellung der Parameter des Geschwindigkeits- und Abstandsregelungssystems, einer Eingabeeinrichtung 12 zur Eingabe der vom Fahrzeugführer vorgebbaren Wunschgeschwindigkeit v_{Wunsch} sowie einer Einrichtung 13 zur Ermittlung der momentanen Fahrgeschwindigkeit des eigenen Fahrzeuges besteht. Zur Aktivierung der Geschwindigkeits- und Abstandsregelung gibt der Fahrzeugführer über die Eingabeeinrichtung 12 eine Wunschgeschwindigkeit v_{Wunsch} vor. Wird über die Einrichtung 9 kein Objekt bzw. Kraftfahrzeug vor dem eigenen Kraftfahrzeug ermittelt, bildet die Steuereinrichtung 14 ein Stelisignal I_{Stell} zur Einstellung der Istgeschwindigkeit vᵢₛₜ auf die Wunschgeschwindigkeit für die Einrichtung 10 zur Beeinflussung der Geschwindigkeit, die Wunschgeschwindigkeit v_{Wunsch} bildet dann die Soligeschwindigkeit. Als Einrichtung 10 zur Beeinflussung der Geschwindigkeit kommt in diesem Fall nur die Antriebsmaschine des Kraftfahrzeuges in Betracht.

Befindet sich ein Fahrzeug vor dem eigenen Kraftfahrzeug, ermittelt die Einrichtung 9 dessen Abstand a zum eigenen Kraftfahrzeug sowie dessen Geschwindigkeit v und gibt diese Daten an die Steuereinheit 14. Die Steuereinheit 14 berechnet nun eine Stellgröße I_{Stell} für die Einrichtung 10 zur Beeinflussung der Geschwindigkeit, in Abhängigkeit der von der Einrichtung 9 erhaltenen Daten als auch der aktuellen Istgeschwindigkeit vᵢₛₜ des eigenen Kraftfahrzeuges. In diesem Fall kann als Einrichtung 10 sowohl die Antriebsmaschine des Kraftfahrzeuges als auch eine Bremseinrichtung verwendet werden.

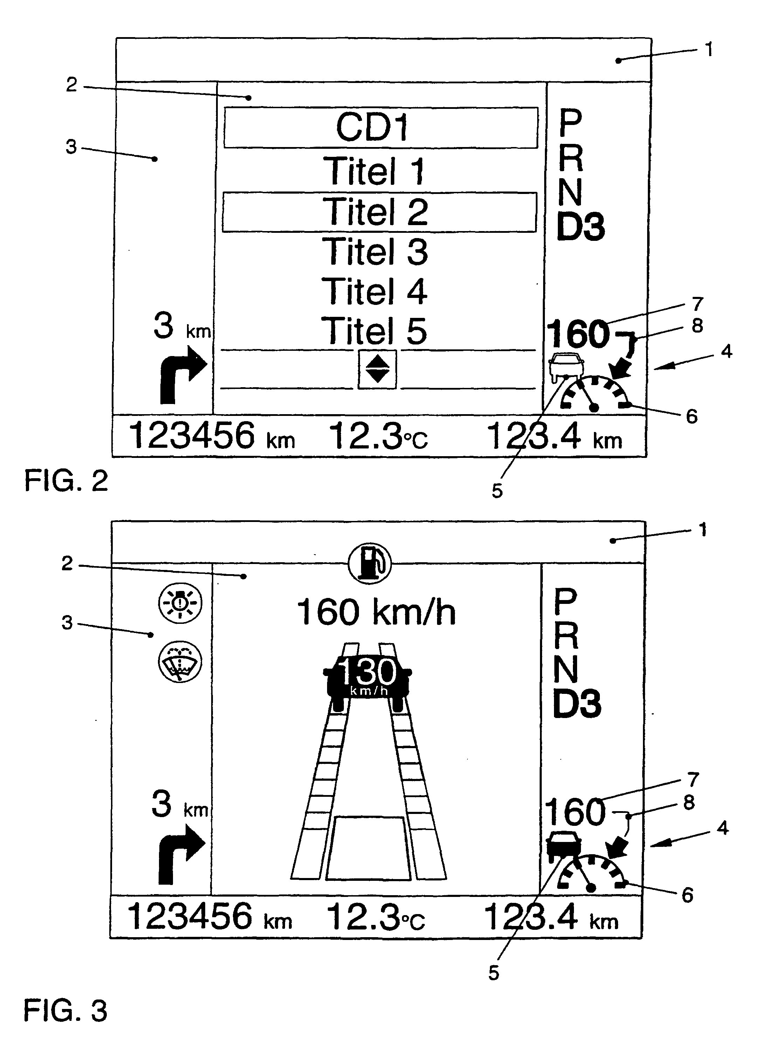

In der Fig. 2 ist eine beispielhafte Darstellung einer Multifunktionsanzeigeeinheit 1 dargestellt. Die Multifunktionsanzeigeeinheit 1 ist dabei im wesentlichen in zwei Bereiche unterteilt, nämlich einen Hauptmenü-Bereich 2 und einen Permanent-Bereich 3. In dem Permanent-Bereich 3, der sich U-förmig über die Randbereich der Multifunktionsanzeigeeinheit 1 erstreckt, sind einzelnen Anzeigen feste Positionen zugeordnet, wobei die Anzeigen permanent oder nur im Aktivierungsfall dargestellt werden. Im Hauptmenü-Bereich 2 werden Informationen und Eingabeoptionen eines vom Nutzer aktuell gewählten Komfortsystems dargestellt. Im dargestellten Beispiel ist dies ein CD-Player eines Audio-Systems. Zur Darstellung des Systemzustandes eines Geschwindigkeits- und Abstandsregelungssystems dient ein Piktogramm 4, das aus einem stilisierten Kraftfahrzeug 5, einem stilisierten Tachometer 6, einer alphanumerischen Anzeige 7 und einem aus zwei Teilen zusammengesetzten Pfeil 8 besteht, der zwischen der alphanumerischen Anzeige 7 und dem Tachometer 6 angeordnet ist. Dabei wird auf der alphanumerischen Anzeige 7 eine eingestellte Sollgeschwindigkeit der Geschwindigkeitsregelung, hier 160 km/h, dargestellt, wobei das stilisierte Kraftfahrzeug 5 der Abstandsregelung zugeordnet ist. Mittels des Pfeils 8 findet eine zusätzliche Zuordnung über das jeweils aktive System statt, wohingegen der Tacho 6 zur Anzeige dient, ob generell eines der geschwindigkeitsregulierenden Systeme eingeschaltet ist. Die Piktogrammteile der jeweils aktiven Systeme sind dabei optisch hervorgehoben. Im dargestellten Ausführungsbeispiel gemäß Fig. 1 sind die alphanumerische Anzeige 7, beide Teile des Pfeils 8 und der Tachometer 6 optisch hervorgehoben. Dies bedeutet, daß gegenwärtig die reine Geschwindigkeitsregelung aktiv ist und eine Sollgeschwindigkeit von 160 km/h eingestellt ist und eingehalten wird, wohingegen die Abstandsregelung inaktiv ist.

In der Fig. 3 ist ein Beispiel mit aktiver Abstandsregelung dargestellt, wobei gleichzeitig im Hauptmenü-Bereich 2 das Geschwindigkeits- und Abstandsregelungssystem aufgerufen wird. Da wieder ein geschwindigkeitsregulierendes System eingeschaltet und aktiv ist, ist der Tachometer 6 erneut optisch hervorgehoben. Ebenso ist das stilisierte Kraftfahrzeug 5 optisch hervorgehoben, das die aktive Abstandsregelung kennzeichnet, wobei von dem Pfeil 8 nur der dem stilisierten Kraftfahrzeug 5 zugeordnete Teil optisch hervorgehoben ist.

Die reine Geschwindigkeitsregelung hingegen ist nicht aktiv, da das Kraftfahrzeug gegenwärtig einem Kraftfahrzeug mit 130 km/h folgt, die Geschwindigkeit für die Geschwindigkeitsregelung vom Fahrer jedoch mit 160 km/h angegeben ist, wie dem Hauptmenü-Bereich 2 zu entnehmen ist. Wird jedoch aktuell keinem anderen Kraftfahrzeug gefolgt, so wird nur der Tachometer 6 optisch hervorgehoben.

In Fällen, in denen der Kraftfahrzeugführer das Geschwindigkeits- und Abstandsregelungssystem deaktiviert hat, ist keines der Elemente 5-8 des Piktogramms 4 optisch hervorgehoben, d.h. kein geschwindigkeitsregulierendes System ist eingeschaltet und kann daher auch nicht aktiv sein.

## Patentansprüche

1. Verfahren zur Darstellung des Sytemzustandes eines Geschwindigkeits- und Abstandsregelungssystems, mittels einer Anzeigeeinheit (1) für verschiedene Fahrzeugsysteme, insbesondere Komfortsysteme,
**dadurch gekennzeichnet, daß**
auf der Anzeigeeinheit (1) permanent ein mindestens zweiteiliges Piktogramm (4) dargestellt wird, wobei jeweils dem Abstandsregelungssystem bzw. dem Geschwindigkeitsregelungssystem ein Teil (5 bzw. 7) des Piktogramms (4) zugeordnet ist, wobei der Teil (5 bzw. 7) des jeweils aktiven Systems optisch hervorgehoben dargestellt wird.

2. Verfahren nach Anspruch 1 oder 2, **dadurch gekennzeichnet, daß** das Piktogramm (4) permanent an der gleichen Stelle auf der Anzeigeeinheit (1) dargestellt wird.

3. Verfahren nach Anspruch 1 oder 2, **dadurch gekennzeichnet, daß** das Piktogramm (4) für das Geschwindigkeits- und Abstandsregelungssystem ein weiteres Element (6) umfaßt, das die generelle Einschaltung des Abstands- und Geschwindigkeitsregelungssystems anzeigt.

4. Vorrichtung zur Durchführung des Verfahrens nach Anspruch 1, umfassend eine Anzeigeeinheit (1) zu Darstellung des Systemzustandes eines Geschwindigkeitsund Abstandsregetungssystems sowie anderer Fahrzeugsysteme und einen den Bildlauf steuernden Mikroprozessor, wobei der Mikroprozessor mit dem Geschwindigkeits- und Abstandsreglungssystems verbunden ist und über die Verbindung Einstellungen und Systemzustände des Geschwindigkeits- und Abstandsreglungssystem erfaßbar sind,
**dadurch gekennzeichnet, daß**
auf der Anzeigeeinheit (1) permanent ein mindestens zweiteiliges Piktogramm (4) dargestellt ist, wobei jeweils dem Abtandsregelungssystem bzw. dem Geschwindigkeitssystem ein Teil (5 bzw. 7) des Piktogramms (4) zugeordnet ist, wobei der Teil (5 bzw. 7) des jeweils aktiven Systems optisch hervorgehoben dargestellt ist.

5. Vorrichtung nach Anspruch 4, **dadurch gekennzeichnet, daß** das Piktogramm (4) permanent an der gleichen Stelle auf der Anzeigeeinheit (1) dargestellt ist.

6. Vorrichtung nach Anspruch 4 und 5, **dadurch gekennzeichnet, daß** das Piktogramm (4) für das Geschwindigkeits- und Abstandsregelungssystem ein welteres Element (6) umfaßt, daß die generelle Einschaltung des Abstands- und Geschwindigkeitsregelungssystem anzeigt.

## Claims

1. Method for representing the system state of a velocity and inter-vehicle distance control system, by means of a display unit (1) for various vehicle systems, in particular comfort systems, **characterized in that** an at least two-part pictogram (4) is continuously represented on the display unit (1), a part (5 or 7) of the pictogram (4) being respectively assigned to the inter-vehicle distance control system or the velocity control system, the part (5 or 7) of the respectively active system being represented in a visually highlighted fashion.

2. Method according to Claim 1 or 2, **characterized in that** the pictogram (4) is represented continuously at the same location on the display unit (1).

3. Method according to Claim 1 or 2, **characterized in that** the pictogram (4) for the velocity and inter-vehicle distance control system comprises a further element (6) which displays the general switching on of the inter-vehicle distance and velocity control system.

4. Device for carrying out the method according to Claim 1, comprising a display unit (1) for representing the system state of a velocity and inter-vehicle distance control system as well as other vehicle systems and a microprocessor which controls the image sequence, the microprocessor being connected to the velocity and inter-vehicle distance control system and it being possible to sense settings and system states of the velocity and inter-vehicle distance control system via the connection, **characterized in that** an at least two-part pictogram (4) is continuously represented on the display unit (1), a part (5 or 7) of the pictogram (4) being respectively assigned to the inter-vehicle distance control system or the velocity control system, the part (5 or 7) of the respectively active system being represented in a visually highlighted fashion.

5. Device according to Claim 4, **characterized in that** the pictogram (4) is represented continuously at the same location on the display unit (1).

6. Device according to Claims 4 and 5, **characterized in that** the pictogram (4) for the velocity and inter-vehicle distance control system comprises a further element (6) which displays the general switching on of the inter-vehicle distance and velocity control system.

## Revendications

1. Procédé de représentation de l'état d'un système de régulation de la vitesse et de l'espacement entre véhicules au moyen d'une unité d'affichage (1) pour différents systèmes de véhicule, notamment des systèmes de confort, **caractérisé en ce qu'**un pictogramme (4) composé d'au moins deux parties est représenté en permanence sur l'unité d'affichage (1), une partie (5 ou 7) du pictogramme (4) étant à chaque fois associée au système de régulation de l'espacement entre véhicules ou au système de régulation de la vitesse, la partie (5 ou 7) du système à chaque fois actif étant mise en valeur visuellement.

2. Procédé selon la revendication 1 ou 2, **caractérisé en ce que** le pictogramme (4) est représenté en permanence au même endroit sur l'unité d'affichage (1).

3. Procédé selon la revendication 1 ou 2, **caractérisé en ce que** le pictogramme (4) pour le système de régulation de la vitesse ou de l'espacement entre véhicules comprend un élément supplémentaire (6) qui indique l'activation générale du système de régulation de la vitesse ou de l'espacement entre véhicules.

4. Dispositif pour mettre en oeuvre le procédé selon la revendication 1, comprenant une unité d'affichage (1) pour représenter l'état d'un système de régulation de la vitesse et de l'espacement entre véhicules ainsi que d'autres systèmes de véhicule et un microprocesseur qui commande le défilement des images, le microprocesseur étant relié au système de régulation de la vitesse et de l'espacement entre véhicules et des réglages ainsi que des états du système de régulation de la vitesse et de l'espacement entre véhicules pouvant être acquis par le biais de la liaison, **caractérisé en ce qu'**un pictogramme (4) composé d'au moins deux parties est représenté en permanence sur l'unité d'affichage (1), une partie (5 ou 7) du pictogramme étant à chaque fois associée au système de régulation de l'espacement entre véhicules ou au système de régulation de la vitesse, la partie (5 ou 7) du système à chaque fois actif étant mise en valeur visuellement.

5. Dispositif selon la revendication 5, **caractérisé en ce que** le pictogramme (4) est représenté en permanence au même endroit sur l'unité d'affichage (1).

6. Dispositif selon la revendication 4 et 5, **caractérisé en ce que** le pictogramme (4) pour le système de régulation de la vitesse ou de l'espacement entre véhicules comprend un élément supplémentaire (6) qui indique l'activation générale du système de régulation de la vitesse ou de l'espacement entre véhicules.
